# EUROPEAN PATENT SPECIFICATION

(11) **EP 2 767 441 B1**
(45) Date of publication and mention of the grant of the patent: **01.06.2016**
(21) Application number: 12839763.5
(22) Date of filing: 12.10.2012
(51) Int. Cl.: B60R 16/02, H04M 19/04, B60R 11/02

(54) **VEHICLE ELECTRONIC DEVICE**
FAHRZEUGELEKTRONIKVORRICHTUNG
DISPOSITIF ÉLECTRONIQUE DE VÉHICULE

(30) Priority: 13.10.2011 JP 2011225594
(43) Date of publication of application: 20.08.2014
(73) Proprietor: Panasonic Intellectual Property Management Co., Ltd., Osaka 540-6207 (JP)
(72) Inventor: NISHIDE, Yousuke, Osaka 540-6207 (JP)
(74) Representative: Vigand, Philippe
(86) International application number: PCT/JP2012/006566
(87) International publication number: WO 2013/054542

(56) References cited:
- WO-A1-02/23933
- JP-A- H08 336 241
- JP-A- 2003 011 734
- JP-A- 2005 218 010
- JP-A- 2009 246 939
- JP-A- 2009 247 194
- JP-A- 2010 068 185
- JP-A- 2011 120 361

## Description

### Technical Field

The present invention relates to an in-vehicle electronic system including an in-vehicle charging device.

### Background Art

With the high-performance of mobile devices, for example, mobile phones, power consumption thereof is increased and therefore it is desired to allow the mobile phone to be charged also in a vehicle. Further, it is also desired to allow a plurality of mobile phones to be charged simultaneously in the vehicle. As a technique similar to this, there is the following Patent Document 1, for example.

### Related Art Documents

### Patent Document

Patent Document 1: JP-A-2011-120361

### Summary of the Invention

### Problems to be Solved by the Invention

In the related art above described, it is difficult to instantaneously discriminate a mobile phone having an incoming call when a plurality of mobile phones is charged and any one of the mobile phones has the incoming call, for example. Accordingly, there is a problem that usability is very bad.

For example, it is undesirable that a driver during driving is directed to look at an in-vehicle charging device when there is an incoming call in the mobile phone. Further, it is also undesirable that an occupant seated on a rear seat discriminates the mobile phone having the incoming call by moving his face toward a front seat, for example.

Accordingly, an object of the present invention is to improve usability. Means for Solving the Problems

To achieve the above purpose, the invention provides an in-vehicle electronic system comprising: an in-vehicle charging device adapted to charge a plurality of mobile devices; and an in-vehicle electronic device that displays information from the mobile devices being charged by the in-vehicle charging device. The in-vehicle charging device includes: a charging base that has a plurality of installation areas on which the plurality of mobile devices adapted to be installed; a charging unit provided at the back side of the charging base; a charging control unit connected to the charging unit; and a charging communication unit connected to the charging control unit. The in-vehicle electronic device includes: an electronic device communication unit that communicates with the charging communication unit; an electronic device control unit connected to the electronic device communication unit; and a notification unit connected to the electronic device control unit. The electronic device control unit controls portions of the notification unit corresponding to the installation areas of the charging base to notify communication states of the mobile devices being charged in the installation areas of the charging base. Advantageous Effects of the Invention

As described above, the in-vehicle electronic system of the present invention includes the in-vehicle charging device which is able to charge a plurality of mobile devices and the in-vehicle electronic device which is configured to display information from the mobile devices being charged by the in-vehicle charging device. The in-vehicle charging device includes the charging base having a plurality of installation areas on which a plurality of mobile devices can be installed, the charging unit provided at the back side of the charging base, the charging control unit connected to the charging unit and the charging communication unit connected to the charging control unit. The in-vehicle electronic device includes the electronic device communication unit communicating with the charging communication unit, the electronic device control unit connected to the electronic device communication unit and the notification unit connected to the electronic device control unit. The electronic device control unit controls portions of the notification unit corresponding to the installation areas of the charging base to notify the communication states of the mobile devices being charged in the installation areas of the charging base. By this configuration, the usability becomes excellent.

That is, the present invention has a configuration that the electronic device control unit controls portions of the notification unit corresponding to the installation areas of the charging base to notify the communication states of the mobile phones being charged in the installation areas of the charging base. Accordingly, the incoming calls in the mobile phones as the mobile devices, for example, are notified by the portions of the notification unit corresponding to the installation areas and therefore both the driver and the occupant seated on the rear seat can easily discriminate the corresponding mobile phones, so that the usability becomes excellent.

### Brief Description of the Drawings

Fig. 1 is a view showing an in-vehicle electronic system according to an illustrative embodiment of the present invention in the state of being mounted to a vehicle.
Fig. 2 is a control block diagram of the in-vehicle electronic system.
Fig. 3 is a front view of an in-vehicle electronic device to configure the in-vehicle electronic system.
Fig. 4 is a view showing a configuration of an in-vehicle charging device to configure the in-vehicle electronic system.
Fig. 5 is a front view of the in-vehicle electronic device to configure the in-vehicle electronic system.
Fig. 6 is a flowchart for explaining an operation of the in-vehicle electronic system.

### Mode for Carrying out the Invention

Hereinafter, an illustrative embodiment of the present invention will be described with reference to the drawings.

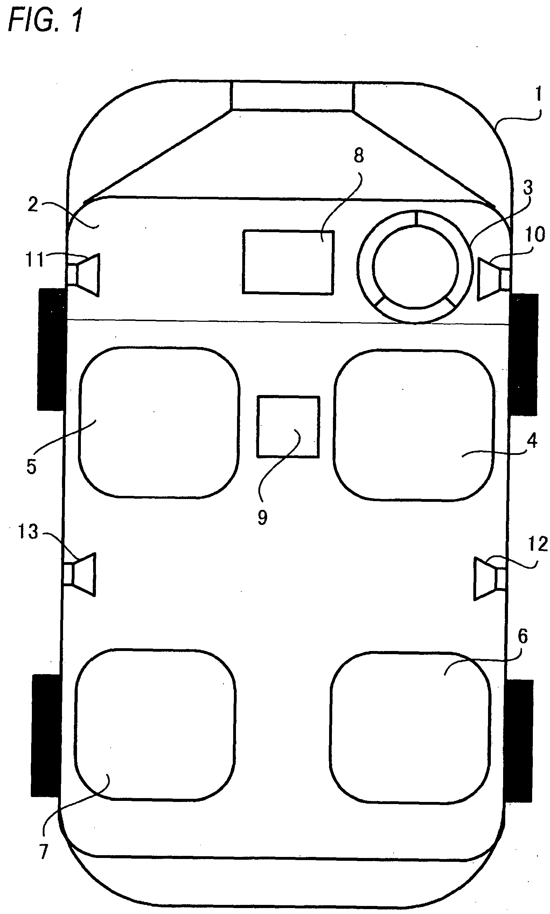

By referring to Fig. 1, a steering wheel 3 is arranged in the front of a vehicle interior 2 of a vehicle body 1 and front seats 4, 5 and rear seats 6, 7 are arranged in the rear of the steering wheel 3.

Further, an in-vehicle electronic device 8 to configure an in-vehicle electronic system of the present embodiment is disposed at a left side of the steering wheel 3 in the vehicle interior 2. In addition, an in-vehicle charging device 9 to configure the in-vehicle electronic system of the present embodiment is disposed between the front seats 4, 5.

Further, a speaker 10 is arranged at the front right side of the front seat 4. In addition, a speaker 11 is arranged at the front left side of the front seat 5.

Furthermore, a speaker 12 is arranged at the front right side of the rear seat 6. In addition, a speaker 13 is arranged at the front left side of the rear seat 7.

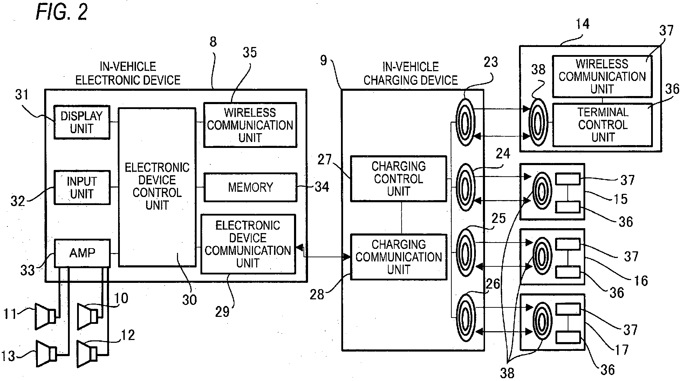

Fig. 2 shows a control block of the in-vehicle electronic device 8 and the in-vehicle charging device 9.

Specifically, the in-vehicle electronic system of the present embodiment includes the in-vehicle electronic device 8 which is able to charge a plurality of mobile phones 14, 15, 16, 17 (as an example of the mobile device) and the in-vehicle charging device 9 which is configured to display information from the mobile phones 14 to 17 being charged by the in-vehicle charging device 9.

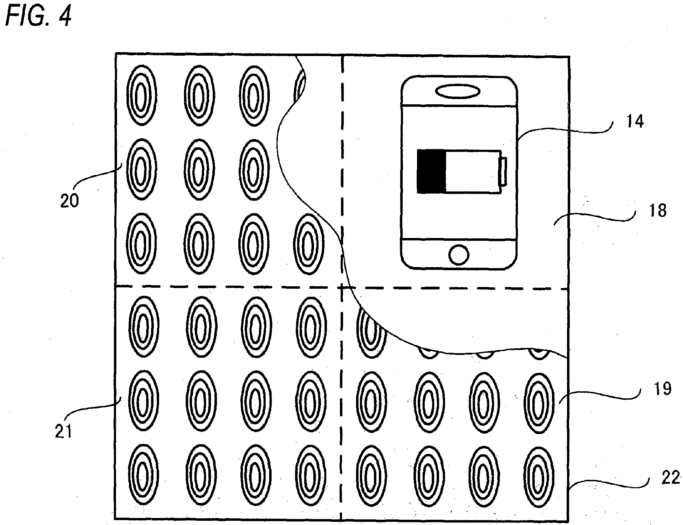

Further, the in-vehicle charging device 9 includes a charging base 22 having four (a plurality of) installation areas 18, 19, 20, 21 on which the plurality of mobile phones 14 to 17 are installed, as shown in Fig. 4, charging coils (as an example of a charging unit) 23, 24, 25, 26 provided at the back side of the charging base 22, as shown in Fig. 2, a charging control unit 27 connected to the charging coils 23 to 26 and a charging communication unit 28 connected to the charging control unit 27.

Furthermore, the in-vehicle electronic device 8 includes an electronic device communication unit 29 communicating with the charging communication unit 28, an electronic device control unit 30 connected to the electronic device communication unit 29 and a display unit 31 connected to the electronic device control unit 30.

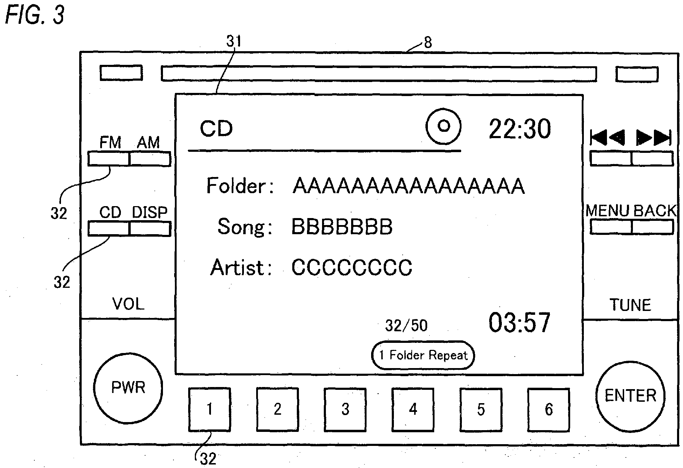

Further, various input units 32, an amplifier unit 33, a memory 34 and a wireless communication unit 35 are connected to the electronic device control unit 30, as shown in Fig. 3. Furthermore, the speakers 10 to 13 described above are respectively connected to the amplifier unit 33.

Meanwhile, the mobile phones 14 to 17 are configured in such a way that respective wireless communication units 37 and respective charging coils 38 are connected to respective terminal control units 36.

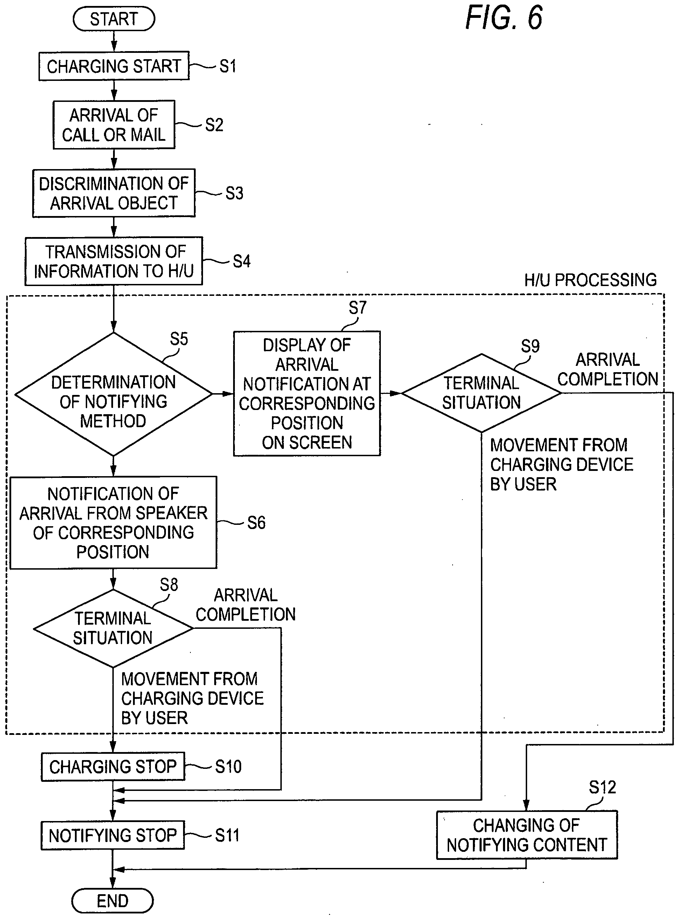

In the above configuration, the mobile phone 14 is installed in the installation area 18 of the in-vehicle charging device 9, the mobile phone 15 is installed in the installation area 19, the mobile phone 16 is installed in the installation area 20 and the mobile phone 17 is installed in the installation area 21, as shown in Fig. 2. In this state, a charging operation is started and a description is made with reference to a flowchart shown in Fig. 6.

At this time, the charging coil 23 of the in-vehicle charging device 9 and the charging coil 38 of the mobile phone 14 are opposed to each other through the charging base 22, as shown in Fig. 2. This relationship is similarly applied to the other charging coils of the in-vehicle charging device and the other charging coils of the other mobile phones. And, when the charging coil 23 of the in-vehicle charging device 9 and the charging coil 38 of the mobile phone 14 are opposed to each other in this way, charging is started (STEP S1 in Fig. 6). Meanwhile, a technique to detect that the mobile phone 14 is installed in the installation area 18 by an opposing relationship between the charging coil 23 and the charging coil 38 is disclosed in Japanese Patent Laid-Open Publication No. 2009-247194, etc. Accordingly, a detailed description thereof is omitted for convenience in explanation.

Meanwhile, when there is an incoming call in the mobile phone 14 during charging of the mobile phone 14 (STEP S2 in Fig. 6), the terminal control unit 36 of the mobile phone 14 notifies the incoming call of the mobile phone 14 to the in-vehicle charging device 9 through the charging coil 38. Specifically, this incoming call is transmitted to the charging control unit 27 through the charging coil 23 and the charging control unit 27 recognizes that there is an incoming call in the mobile phone 14 installed in the installation area 18 of Fig. 4 (STEP S3 in Fig. 6).

From the charging control unit 27, the fact that there is an incoming call in the mobile phone 14 is notified to the electronic device communication unit 29 of the in-vehicle electronic device 8 through the charging communication unit 28 (STEP S4 in Fig. 6).

The electronic device control unit 30 connected to the electronic device communication unit 29 notifies the fact that there is an incoming call in the mobile phone 14 installed in the installation area 18 to the display unit 31 and the speaker 10 (STEPs S5, S6, S7 in Fig. 6).

Since the speaker 10 is arranged at the front right side of the front seat 4, as shown in Fig. 1, the fact that there is an incoming call in the mobile phone 14 of a driver seated on the front seat 4 is notified when the notification sound to notify the incoming call is issued from the speaker (STEP S8 in Fig. 6).

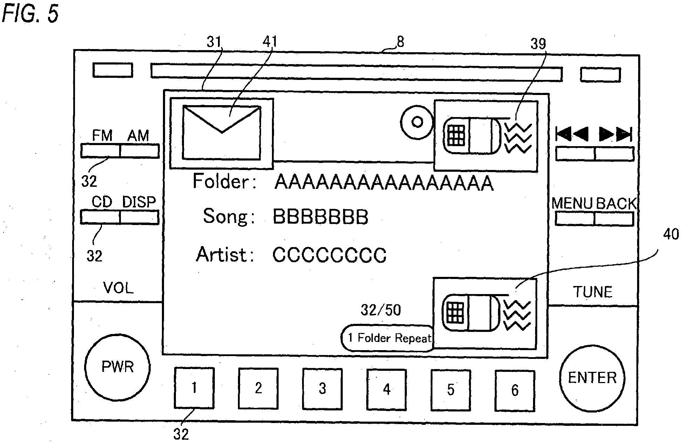

At the same time, the fact that there is an incoming call in the mobile phone 14 is displayed on the display unit 31, as shown in Fig. 5. Specifically, the display unit 31 has a rectangular shape, a calling mark 39 notifying the fact that there was an incoming call in the mobile phone 14 of the driver seated on the front seat 4 is displayed on an upper right corner portion assumed as the front seat 4 and therefore the fact that there was an incoming call in the mobile phone 14 of the driver seated on the front seat 4 is notified (STEP S9 in Fig. 6).

In this example, since the mobile phone 14 in which there was an incoming call belongs to the driver, the driver cannot catch the mobile phone 14 during driving. Accordingly, as shown in Fig. 5, the calling mark 39 is continuously displayed on the display unit 31.

On the other hand, when there is an incoming call in the mobile phone 15 installed in the installation area 19, as shown in Fig. 5, a calling mark 40 is displayed on a lower right corner portion of the display unit 31 and a notification sound is issued from the speaker 12 at the front right side of the rear seat 6 shown in Fig. 1. At this time, an occupant seated on the rear seat 6 detaches own mobile phone 15 from the charging base 22 of the in-vehicle charging device 9 and can make a call. Then, as in STEP S10 of Fig. 6, power supply to the charging coil 24 corresponding to the mobile phone 15 is stopped, the calling mark 40 shown in Fig. 5 is also erased and the notification by the speaker 12 is also stopped (STEP S11 in Fig. 6).

Thereafter, when there is an incoming mail in the mobile phone 16 of an occupant seated on the front seat 5, a notification sound is issued from the speaker 11 and a calling mark 41 to represent the mail arrival is displayed on an upper left corner portion of the display unit 31 shown in Fig. 5, in a manner similar to those described above. Also in this case, when the occupant seated on the front seat 5 detaches own mobile phone 16 from the charging base 22 of the in-vehicle charging device 9 so as to check the incoming mail, as in STEP S10 of Fig. 6, power supply to the charging coil 25 corresponding to the mobile phone 16 is stopped, the calling mark 41 shown in Fig. 5 is also erased and the notification by the speaker 11 is also stopped (STEP S11 in Fig. 6). Meanwhile, in STEP S9, when the terminal situation is in a state where the incoming call is ended, the notification content is correspondingly changed (STEP S12 in Fig. 6).

As described above, the present embodiment has a configuration that the electronic device control unit 30 controls portions of the display unit 31 corresponding to the installation areas 18, 19, 20, 21 of the charging base 22 to display the communication states of the mobile phones 14, 15, 16, 17 being charged in the installation areas 18, 19, 20, 21 of the charging base 22. Accordingly, the incoming calls in the mobile phones 14, 15, 16, 17 as the mobile devices, for example, are displayed on the portions of the display unit corresponding to the installation areas 18, 19, 20, 21 and therefore both the driver and the occupant seated on the rear seat can easily discriminate the corresponding mobile phones 14, 15, 16, 17, so that the usability is very good.

Although the present invention has been described in detail with reference to particular illustrative embodiments, the present invention is not limited to the illustrative embodiments and it is obvious to those skilled in the art that the illustrative embodiments can be variously modified without departing a spirit and a scope of the present invention.

This application is based upon Japanese Patent Application (Patent Application No. 2011-225594) filed on October 13, 2011 . Industrial Applicability

As described above, the in-vehicle electronic system of the present invention includes the in-vehicle charging device which is able to charge a plurality of mobile devices and the in-vehicle electronic device which is configured to display information from the mobile devices being charged by the in-vehicle charging device. The in-vehicle charging device includes the charging base having a plurality of installation areas on which a plurality of mobile devices can be installed, the charging unit provided at the back side of the charging base, the charging control unit connected to the charging unit and the charging communication unit connected to the charging control unit. The in-vehicle electronic device includes the electronic device communication unit communicating with the charging communication unit, the electronic device control unit connected to the electronic device communication unit and the notification unit connected to the electronic device control unit. The electronic device control unit controls portions of the notification unit corresponding to the installation areas of the charging base to notify the communication states of the mobile devices being charged in the installation areas of the charging base. Accordingly, the usability is very good.

That is, the present invention has a configuration that the electronic device control unit controls portions of the notification unit corresponding to the installation areas of the charging base to notify the communication states of the mobile phones being charged in the installation areas of the charging base. Accordingly, the incoming calls in the mobile phones as the mobile devices, for example, are notified by the portions of the notification unit corresponding to the installation areas and therefore both the driver and the occupant seated on the rear seat can easily discriminate the corresponding mobile phones, so that the usability is very good. Accordingly, the present invention is expected to be utilized as the in-vehicle electronic system.

### Description of Reference Numerals and Signs

- 1: vehicle body
- 2: vehicle interior
- 3: steering wheel
- 4,5: front seat
- 6,7: rear seat
- 8: in-vehicle electronic device
- 9: in-vehicle charging device
- 10,11,12,13: speaker
- 14,15,16,17: mobile phone (as one example of a mobile device)
- 18,19,20,21: installation area
- 22: charging base
- 23,24,25,26: charging coil (as one example of a charging unit)
- 27: charging control unit
- 28: charging communication unit
- 29: electronic device communication unit
- 30: electronic device control unit
- 32: respective input units
- 33: amplifier unit
- 34: memory
- 35: wireless communication unit
- 36: terminal control unit
- 37: wireless communication unit
- 38: charging coil
- 39,40,41: calling mark

## Claims

1. An in-vehicle electronic system comprising:
an in-vehicle charging device (9) adapted to charge a plurality of mobile devices (14 to 17); and
an in-vehicle electronic device (8) that displays information from the mobile devices (14 to 17) being charged by the in-vehicle charging device (9),
wherein the in-vehicle charging device (9) includes:
a charging base (22) that has a plurality of installation areas (18 to 21) on which the plurality of mobile devices (14 to 17) adapted to be installed;
a charging unit (23 to 26) provided at the back side of the charging base (22);
a charging control unit (27) connected to the charging unit (23 to 26); and
a charging communication unit (28) connected to the charging control unit (27);
wherein the in-vehicle electronic device (8) includes:
an electronic device communication unit (29) that communicates with the charging communication unit (28);
an electronic device control unit (30) connected to the electronic device communication unit (29); and
a notification unit (31) connected to the electronic device control unit (30); and
**characterized in that** the electronic device control unit (30) controls portions of the notification unit (31) corresponding to the installation areas (18 to 21) of the charging base (22) to notify communication states of the mobile devices (14 to 17) being charged in the installation areas (18 to 21) of the charging base (22).

2. The in-vehicle electronic system according to claim 1, wherein the notification unit (31) is a display unit; and
wherein the electronic device control unit (30) controls portions of the display unit corresponding to the installation areas (18 to 21) of the charging base (22) to display the communication states of the mobile devices (14 to 17) being charged in the installation areas (18 to 21) of the charging base (22).

3. The in-vehicle electronic system according to claim 2, wherein the display unit has a rectangular shape; and
wherein the communication states of the mobile devices (14 to 17) are displayed on corner portions of the display unit.

4. The in-vehicle electronic system according to claim 3, wherein the charging base (22) is provided with four installation areas (18 to 21); and
wherein the communication states of the mobile devices (14 to 17) are displayed on four corner portions of the display unit.

5. The in-vehicle electronic system according to any one of claims 1 to 4, wherein the charging unit (23 to 26) of the in-vehicle charging device (9) is configured by a plurality of charging coils which are provided at the back side of the charging base (22).

6. The in-vehicle electronic system according to claim 1, wherein the notification unit (31) includes a plurality of speakers (10 to 12); and
wherein the electronic device control unit (30) controls sound of the speakers (10 to 12) at locations corresponding to the installation areas (18 to 21) to notify the communication states of the mobile devices (14 to 17) being charged in the installation areas (18 to 21) of the charging base (22).

7. The in-vehicle electronic system according to claim 6, wherein the charging unit (23 to 26) of the in-vehicle charging device (9) is configured by a plurality of charging coils which are provided at the back side of the charging base (22).

## Patentansprüche

1. Fahrzeugelektroniksystem, aufweisend:
eine fahrzeugseitige Ladevorrichtung (9), die für ein Laden mehrerer mobiler Geräte (14 bis 17) angepasst ist; und
eine Fahrzeugelektronikvorrichtung (8), die Information von den mobilen Geräten (14 bis 17), die durch die fahrzeugseitige Ladevorrichtung (9) geladen werden, anzeigt,
wobei die fahrzeugseitige Ladevorrichtung (9) Folgendes aufweist:
eine Ladebasis (22), die mehrere Einbaubereiche (18 bis 21) aufweist, an denen die mehreren mobilen Geräte (14 bis 17) für eine Installation angepasst sind;
eine Ladeeinheit (23 bis 26), die auf der Rückseite der Ladebasis (22) bereitgestellt ist;
eine Ladesteuereinheit (27), die mit der Ladeeinheit (23 bis 26) verbunden ist; und
eine Ladekommunikationseinheit (28), die mit der Ladesteuereinheit (27) verbunden ist;
wobei die Fahrzeugelektronikvorrichtung (8) Folgendes umfasst:
eine Elektronikvorrichtung-Kommunikationseinheit (29), die mit der Ladekommunikationseinheit (28) kommuniziert;
eine Elektronikvorrichtung-Steuereinheit (30), die mit der Elektronikvorrichtung-Kommunikationseinheit (29) verbunden ist; und
eine Benachrichtigungseinheit (31), die mit der Elektronikvorrichtung-Steuereinheit (30) verbunden ist; und
**dadurch gekennzeichnet ist, dass** die Elektronikvorrichtung-Steuereinheit (30) Teile der Benachrichtigungseinheit (31) entsprechend den Einbaubereichen (18 bis 21) der Ladebasis (22) steuert, über die Kommunikationsstatus der mobilen Geräte (14 bis 17) zu benachrichtigen, die in den Einbaubereichen (18 bis 21) der Ladebasis (22) geladen werden.

2. Fahrzeugelektroniksystem nach Anspruch 1, wobei die Benachrichtigungseinheit (31) eine Anzeigeeinheit ist; und
wobei die Elektronikvorrichtung-Steuereinheit (30) Teile der Anzeigeeinheit entsprechend den Einbaubereichen (18 bis 21) der Ladebasis (22) steuert, die Kommunikationsstatus der mobilen Geräte (14 bis 17) anzuzeigen, die in den Einbaubereichen (18 bis 21) der Ladebasis (22) geladen werden.

3. Fahrzeugelektroniksystem nach Anspruch 2, wobei die Anzeigeeinheit eine rechteckige Form aufweist; und
wobei die Kommunikationsstatus der mobilen Geräte (14 bis 17) in Eckbereichen der Anzeigeeinheit angezeigt werden.

4. Fahrzeugelektroniksystem nach Anspruch 3, wobei die Ladebasis (22) mit vier Einbaubereichen (18 bis 21) bereitgestellt ist; und
wobei die Kommunikationsstatus der mobilen Geräte (14 bis 17) in vier Eckbereichen der Anzeigeeinheit angezeigt werden.

5. Fahrzeugelektroniksystem nach einem der Ansprüche 1 bis 4, wobei die Ladeeinheit (23 bis 26) der Ladevorrichtung (9) mit mehreren Ladespulen konfiguriert ist, die auf der Rückseite der Ladebasis (22) bereitgestellt sind.

6. Fahrzeugelektroniksystem nach Anspruch 1, wobei die Benachrichtigungseinheit (31) mehrere Lautsprecher (10 bis 12) umfasst; und
wobei die Elektronikvorrichtung-Steuereinheit (30) Ton von den Lautsprechern (10 bis 12) an Einbauorten entsprechend den Einbaubereichen (18 bis 21) zum Benachrichtigen über die Kommunikationsstatus der mobilen Geräte (14 bis 17), die in den Einbaubereichen (18 bis 21) der Ladebasis (22) geladen werden, steuert.

7. Fahrzeugelektroniksystem nach Anspruch 6, wobei die Ladeeinheit (23 bis 26) der fahrzeugseitigen Ladevorrichtung (9) mit mehreren Ladespulen konfiguriert ist, die auf der Rückseite der Ladebasis (22) bereitgestellt sind.

## Revendications

1. Système électronique de véhicule comprenant :
un dispositif de chargement de véhicule (9) adapté pour charger une pluralité de dispositifs mobiles (14 à 17) ; et
un dispositif électronique de véhicule (8) qui affiche des informations qui proviennent des dispositifs mobiles (14 à 17) chargés par le dispositif de chargement de véhicule (9),
dans lequel le dispositif de chargement de véhicule (9) comprend :
une base de chargement (22) qui possède une pluralité de zones d'installation (18 à 21) sur lesquelles la pluralité de dispositifs mobiles (14 à 17) peut être installée ;
une unité de chargement (23 à 26) prévue à l'arrière de la base de chargement (22) ;
une unité de contrôle de chargement (27) reliée à l'unité de chargement (23 à 26) ; et
une unité de communication de chargement (28) reliée à l'unité de contrôle de chargement (27) ;
dans lequel le dispositif électronique de véhicule (8) comprend :
une unité de communication de dispositif électronique (29) qui communique avec l'unité de communication de chargement (28) ;
une unité de contrôle de dispositif électronique (30) reliée à l'unité de communication de dispositif électronique (29) ; et
une unité de notification (31) reliée à l'unité de contrôle de dispositif électronique (30) ; et
**caractérisé en ce que** l'unité de contrôle de dispositif électronique (30) contrôle les parties de l'unité de notification (31) qui correspondent aux zones d'installation (18 à 21) de la base de chargement (22) afin d'indiquer les états de communication des dispositifs mobiles (14 à 17) chargés dans les zones d'installation (18 à 21) de la base de chargement (22).

2. Système électronique de véhicule selon la revendication 1, dans lequel l'unité de notification (31) est une unité d'affichage ; et
dans lequel l'unité de contrôle de dispositif électronique (30) contrôle les parties de l'unité d'affichage qui correspondent aux zones d'installation (18 à 21) de la base de chargement (22) afin d'afficher les états de communication des dispositifs mobiles (14 à 17) chargés dans les zones d'installation (18 à 21) de la base de chargement (22).

3. Système électronique de véhicule selon la revendication 2, dans lequel l'unité d'affichage possède une forme rectangulaire ; et
dans lequel les états de communication des dispositifs mobiles (14 à 17) sont affichés dans les angles de l'unité d'affichage.

4. Système électronique de véhicule selon la revendication 3, dans lequel la base de chargement (22) est munie de quatre zones d'installation (18 à 21) ; et
dans lequel les états de communication des dispositifs mobiles (14 à 17) sont affichés dans quatre angles de l'unité d'affichage.

5. Système électronique de véhicule selon l'une quelconque des revendications 1 à 4, dans lequel l'unité de chargement (23 à 26) du dispositif de chargement de véhicule (9) est configurée par une pluralité de bobines de chargement qui sont prévues à l'arrière de la base de chargement (22).

6. Système électronique de véhicule selon la revendication 1, dans lequel l'unité de notification (31) comprend une pluralité de haut-parleurs (10 à 12) ; et
dans lequel l'unité de contrôle de dispositif électronique (30) contrôle le son des haut-parleurs (10 à 12) à des emplacements qui correspondent aux zones d'installation (18 à 21) afin d'indiquer les états de communication des dispositifs mobiles (14 à 17) chargés dans les zones d'installation (18 à 21) de la base de chargement (22).

7. Système électronique de véhicule selon la revendication 6, dans lequel l'unité de chargement (23 à 26) du dispositif de chargement de véhicule (9) est configurée par une pluralité de bobines de chargement qui sont prévues à l'arrière de la base de chargement (22).
